# FASCICULE DE BREVET EUROPEEN

(11) **EP 2 199 614 B1**
(45) Date de publication et mention de la délivrance du brevet: **28.09.2016**
(21) Numéro de dépôt: 08172593.9
(22) Date de dépôt: 22.12.2008
(51) Int. Cl.: F04D 7/04, F04D 31/00, B01D 19/00

(54) **Machine combinée de pompage et de séparation pour circuit d'huile de turboréacteur**
Kombinierte Pump- und Abscheidemaschine für Ölkreislauf eines Turbostrahltriebwerks
Combined pumping and separation machine for the oil circuit of a jet engine

(43) Date de publication de la demande: 23.06.2010
(73) Titulaire: Safran Aero Boosters SA, 4041 Herstal (BE)
(72) Inventeur: Cornet, Albert, B-4800, Verviers (BE); Raimackers, Nicolas, B-4263, Tourinne (Braives) (BE)
(74) Mandataire: Lerho, Marc J. A.

(56) Documents cités:
- US-A- 1 345 895
- US-A- 4 198 218
- US-A- 4 600 413
- US-A- 5 861 052

## Description

### Objet de l'invention

La présente invention se rapporte à une machine centrifuge permettant de réaliser, en totalité ou en partie, les quatre fonctions suivantes :
- aspiration,
- déshuilage ou plus généralement séchage,
- désaération ou plus généralement dégazage et
- refoulement d'un mélange gaz/liquide.
Le mélange comprend par exemple de l'air et de l'huile, ou plus généralement un fluide léger et un fluide lourd.

La machine selon l'invention doit pouvoir gérer les variations de richesse du mélange en entrée et permettre d'accepter un mélange allant d'un gaz pur à un liquide pur et de produire en sortie les deux phases séparées de ce mélange.

Le domaine technique d'application est plus particulièrement celui des circuits d'huile de lubrification et de refroidissement des turbomachines.

De manière plus générale, l'invention concerne toute application où une combinaison des fonctions de pompage et de séparation de plusieurs fluides est nécessaire. L'invention s'applique également à la séparation d'un mélange gaz/liquide dans lequel la proportion gaz/liquide est fortement variable.

L'invention se rapporte aussi à une méthode pour la réalisation combinée de pompage et de séparation dans un circuit d'huile de lubrification et de refroidissement dans un moteur aéronautique, par mise en oeuvre de la machine précitée.

### Etat de la technique

Dans un turboréacteur actuel, un débit d'huile est envoyé par une pompe sur les roulements, les engrenages et les paliers afin de les lubrifier et de les refroidir. Afin d'éviter toute fuite d'huile à l'extérieur de l'enceinte, un débit d'air, prélevé au compresseur, est forcé de l'extérieur vers l'intérieur de l'enceinte à travers des joints aux interfaces de l'arbre moteur.

Cet air est ensuite évacué vers l'atmosphère par un premier circuit spécifique destiné à le déshuiler et à contrôler la pression de l'enceinte. La fonction dite de déshuilage/séchage est généralement effectuée au moyen d'un dispositif spécifique, appelé déshuileur. Ce dernier renvoie d'un côté de l'air exempt d'huile, et d'un autre côté un mélange diphasique d'air et d'huile vers une autre partie du moteur, appelé désaérateur. Des joints dynamiques permettent de limiter ce débit prélevé au moteur, ce qui améliore son efficacité.

Par ailleurs, l'huile injectée sur les éléments mobiles est récupérée en fond d'enceinte par des pompes dites de récupération (une par enceinte), via un second circuit spécifique. Pour assurer un assèchement complet de l'enceinte, une faible part d'air est aussi aspirée par ce circuit et le mélange ainsi aspiré par ces pompes doit être séparé avant de renvoyer l'huile purifiée, donc exempte d'air au réservoir. Cette opération de séparation, appelée désaération, est effectuée au moyen d'un désaérateur, lequel renvoie d'une part de l'huile purifiée vers le réservoir, pour être pompée ensuite vers le moteur et d'autre part un mélange diphasique d'air et d'huile vers le déshuileur.

On peut donc résumer comme suit l'architecture commune d'un système d'huile de turboréacteur selon l'état de la technique. Les roulements, engrenages et paliers enfermés dans les enceintes sont lubrifiés à l'aide de l'huile injectée par la pompe d'alimentation et récupérée par les pompes de récupération. Les joints dynamiques séparent l'enceinte, contenant un mélange d'air et d'huile, du reste du moteur. Afin d'éviter une fuite d'huile de l'enceinte vers le reste du moteur à travers les joints, ceux-ci sont pressurisés à l'aide d'air provenant du compresseur, induisant un débit permanent d'air entrant de l'extérieur vers l'intérieur de l'enceinte et refoulant l'huile. En général, l'enceinte est mise à l'air libre à travers le système de séparation appelé déshuileur. On dit alors que l'enceinte est ventilée. Dans le cas contraire où tout l'air entrant par les joints sort par le système de récupération d'huile, l'enceinte est dite non ventilée.

Dans le circuit de récupération de l'huile, le désaérateur a pour fonction d'une part d'éviter les problèmes de cavitation résultant de la présence d'air dans l'huile et d'autre part de garantir la qualité de l'huile, puisque l'entraînement d'un gaz tel que l'air dans l'huile peut affecter la performance des systèmes hydrauliques, du fait que le gaz introduit un certain degré de compressibilité dans le fluide hydraulique.

Les deux fonctions de séparation précitées correspondent à des équipements physiquement distincts dans les moteurs actuels. De plus, le système de séparation est généralement découplé de la fonction de pompage. Le fluide diphasique passe par un séparateur fonctionnant selon le principe de la centrifugation ou de la décantation et permettant de récupérer séparément les deux fluides. La séparation est réalisée grâce à la différence de densité entre les deux fluides. Le débit d'huile est alors assuré par une pompe montée en série sur le désaérateur. Ainsi, dans le domaine de la lubrification des moteurs aéronautiques, ces systèmes posent problème de par leur encombrement, leur poids et plus indirectement à cause de leur complexité de montage.

Le brevet US 3,240,003 A décrit une machine pour séparer un liquide d'un flux de gaz auquel le liquide est mélangé, comprenant une canalisation munie d'un élargissement dans lequel est en rotation, selon l'axe de la canalisation, un séparateur centrifuge sous forme d'un élément tronconique creux qui permet de collecter le liquide sous l'effet de la force centrifuge, via une masse poreuse traversée par le mélange gaz/liquide, dans un espace annulaire à la périphérie la plus large dudit élément tronconique. Le liquide est ensuite entraîné dans un réservoir au moyen d'un système d'écope se présentant sous la forme d'un tube de collecte fixe dont les deux extrémités plongent dans l'espace annulaire et font face au sens opposé au sens de mouvement du liquide lorsque le séparateur tourne. Ce système ne présente pas de fonction d'aspiration.

Le document EP 0 298 442 A2 décrit une machine pour dégazer un fluide à pomper comprenant des suspensions de fibres dans l'industrie papetière. Cette machine, adaptée uniquement à la désaération, comprend une pompe centrifuge dans laquelle le passage d'évacuation du gaz, depuis la sortie du rotor vers la canalisation de sortie du gaz, est muni de surfaces écrans qui permettent de séparer le gaz sortant des particules solides charriées par le mélange diphasique, tout en évitant le colmatage par ces particules solides. Le système décrit dans ce document est peu adapté à de grandes variations de richesse du mélange diphasique, comme c'est le cas dans les turbomachines.

Le document JP 60-014921 A décrit une machine pour séparer un mélange gaz-liquide, comprenant un corps tournant au centre duquel est introduit le mélange et faisant office de pompe centrifuge. Les gouttelettes de liquide du mélange sont séparées par la force centrifuge et déchargées dans un conduit de sortie du liquide située à la périphérie de la machine. Le gaz séparé du mélange est déchargé axialement dans un conduit de sortie du gaz. Le gaz de sortie actionne une turbine. L'efficacité de séparation est accrue en utilisant un corps poreux qui permet d'augmenter la taille des gouttelettes de liquide. Cette machine est principalement adaptée au déshuilage ou séchage d'un mélange riche en gaz.

Le brevet US 4,198,218 décrit un dispositif pour enlever des particules humidifiées d'un gaz. L'air chargé de particules est soumis à une force centrifuge pour séparer les particules humidifiées de l'air et séparer l'eau des particules. Le courant d'air avant sa sortie passe à travers un séparateur mécanique pour enlever toute particule qui subsisterait.

Les machines proposées dans l'état de la technique ne sont donc pas efficaces sur tout l'intervalle de proportions liquide/gaz rencontré pour le mélange diphasique huile/air rencontré dans le domaine de vol d'un moteur aéronautique. Ce mélange diphasique peut être constitué d'un flux d'huile pollué de bulles d'air (émulsion) ou contenant des poches d'air (par exemple à bas régime du moteur). En particulier, une machine à écope serait saturée et ne fonctionnerait pas bien dans le cas d'un vol d'un avion effectuant des manoeuvres.

Plus spécifiquement, dans les moteurs aéronautiques, on connaît des déshuileurs qui ne présentent pas de fonction d'aspiration et/ou de fonction de refoulement.

Généralement, que ce soit dans les déshuileurs ou dans les désaérateurs, on ne se préoccupe pas de la pureté de la phase rejetée. Soit l'on produit de l'huile pure d'un côté et l'on rejette un mélange air/huile de l'autre, soit l'on produit de l'air pur et l'on rejette un mélange huile/air de l'autre côté. Ainsi la qualité du mélange rejeté, dans l'état de l'art mentionné ci-dessus, n'est pas une grande préoccupation. Ce manque de performance sur le mélange rejeté conduirait, par l'utilisation de systèmes semblables, à un surdimensionnement de l'équipement et un manque de compacité, celle-ci étant pourtant nécessaire pour un équipement aéronautique embarqué.

### Buts de l'invention

La présente invention a pour but de remédier aux inconvénients de l'état de la technique.

En particulier, l'invention vise à améliorer le rendement global des circuits d'huile de lubrification et de refroidissement des turbomachines, permettant, via une amélioration de la qualité de séparation air/huile, une réduction de la consommation d'huile, ainsi qu'une réduction de poids.

L'invention a aussi pour objectif d'améliorer la pureté des différentes phases fluides récupérées à la sortie de la machine.

L'invention a encore pour but de fournir un système simplifié et de poids et d'encombrement réduits.

### Principaux éléments caractéristiques de l'invention

Un premier objet de la présente invention se rapporte à une machine combinée de pompage et de séparation en deux phases distinctes et purifiées d'un mélange ou fluide diphasique liquide/gaz, de préférence huile/air, en entrée de la machine, comprenant des moyens d'aspiration, de pompage et de séparation partielle du fluide diphasique, des moyens de séchage et d'évacuation du gaz séparé et des moyens de dégazage et de refoulement du liquide séparé, caractérisée en ce qu'elle comporte au moins trois étages (A, B, C). Selon l'invention, ces trois étages sont physiquement séparés, aptes à être mis en mouvement par un moyen interne ou externe à la machine, qui peut être mécanique, électrique ou autre et intégrés dans un carter unique. Plus précisément, on a :
- un premier étage (A), muni d'une entrée pour le fluide diphasique, dans lequel ont lieu l'aspiration, le pompage et une séparation partielle du fluide diphasique en deux phases distinctes, une phase essentiellement liquide et une phase essentiellement gazeuse, ledit premier étage (A) comprenant au moins partiellement un rouet axialo-centrifuge de forme tronconique pouvant être mis en rotation dans un carter fixe de même forme, couplé à un arbre d'entraînement disposé selon l'axe de la machine, l'ensemble étant appelé « inducteur », et qui confère au fluide diphasique entrant une pression de pompage et provoque la séparation centrifuge partielle en une phase essentiellement liquide et une phase essentiellement gazeuse ;
- un deuxième étage (B), comprenant deux zones :
   - une première zone dans laquelle a lieu le dégazage de la phase essentiellement liquide extraite du premier étage (A) et
   - une seconde zone dans laquelle a lieu le séchage de la phase essentiellement gazeuse extraite du premier étage (A), muni d'une première sortie pour le gaz séché ;
- un troisième étage (C), dans lequel a lieu le refoulement et la mise en pression du liquide dégazé, muni d'une seconde sortie pour le liquide dégazé, le troisième étage (C) comprend une volute, située de manière distale par rapport à l'arbre d'entraînement et configurée pour que le liquide obtenu à la sortie de la première zone du deuxième étage (B) soit mis en pression dans ladite volute et refoulé par la seconde sortie.

Selon des formes d'exécution préférées de l'invention, le dispositif de l'invention comporte en outre, en combinaison, une ou plusieurs des caractéristiques suivantes :
- les deux zones du deuxième étage (B) sont concentriques, la première zone étant un tampon essentiellement annulaire à la périphérie externe du deuxième étage (B) qui permet le dégazage ou la désaération de la phase essentiellement liquide et la seconde zone étant une zone essentiellement cylindrique interne au deuxième étage (B) qui permet le séchage ou le déshuilage de la phase essentiellement gazeuse ;
- la première zone du second étage (B) comprend la partie la plus externe de l'inducteur, située de manière distale par rapport à l'arbre d'entraînement et configurée pour que le liquide obtenu après séparation partielle et extraction dans le premier étage (A) soit dégazé avant d'être transféré au troisième étage (C) ;
- la seconde zone du second étage (B) est couplée de manière rotative à l'arbre d'entraînement, située de manière proximale par rapport audit arbre et configurée pour que le gaz chargé de gouttelettes de liquide après séparation partielle et extraction dans le premier étage (A) soit déshuilé par passage forcé dans ladite seconde zone et extrait de la machine par la première sortie ;
- la seconde zone comprend un disque formé d'un corps solide poreux, par exemple en mousse métallique, ou percé de canaux d'un diamètre intérieur vers l'extérieur, ou encore des aubages de déshuilage ;
- la première sortie comprend un orifice axial ménagé dans l'arbre d'entraînement ;
- la volute est configurée pour maintenir, en utilisation, un anneau continu de liquide en son sein, quel que soit la composition du mélange en entrée de la machine ;
- le liquide refoulé est extrait de la volute axialement ou tangentiellement ;
- ladite volute comprend une vanne placée en sortie de volute, ladite vanne ayant un tarage ne permettant que la sortie de liquide, c'est-à-dire le fluide de densité supérieure ;
- l'inducteur présente, dans sa partie distale par rapport à l'axe, un canal radial débouchant dans la volute de manière sensiblement parallèle à la direction de la force centrifuge à laquelle le fluide diphasique est soumis.

Un deuxième objet de la présente invention se rapporte à un circuit d'huile de lubrification et de refroidissement dans un moteur aéronautique, de préférence un turboréacteur, comprenant une machine combinée de pompage et de séparation en deux phases distinctes purifiées du fluide diphasique huile/air en entrée de la machine, tel que décrit ci-dessus.

Un troisième objet de la présente invention se rapporte à une méthode pour la réalisation combinée de pompage et de séparation d'un fluide diphasique huile/air en deux phases distinctes et purifiées, dans un circuit d'huile de lubrification et de refroidissement d'un moteur aéronautique, mettant en oeuvre la machine telle que décrite ci-dessus, caractérisée en ce que l'on effectue, dans des étages (A, B, C) séparés physiquement, les fonctions respectives d'aspiration, de pompage et de séparation partielle du fluide diphasique, de séchage et d'évacuation du gaz séparé et de dégazage et de refoulement du liquide séparé, de la manière suivante :
- dans le premier étage (A), muni d'une entrée pour le fluide diphasique, sont effectués l'aspiration, le pompage et la séparation partielle du fluide diphasique en deux phases distinctes, une phase essentiellement liquide et une phase essentiellement gazeuse ;
- dans la première zone du deuxième étage (B) est effectuée le dégazage de la phase essentiellement liquide extraite du premier étage (A);
- dans la seconde zone du deuxième étage (B) est effectué le séchage et/ou le filtrage de la phase essentiellement gazeuse extraite du premier étage (A), le gaz purifié étant finalement extrait par une première sortie ;
- dans le troisième étage (C) sont effectués le refoulement et la mise en pression du liquide purifié extrait du deuxième étage (B), ledit liquide purifié étant mis en pression dans une volute et finalement extrait par une seconde sortie.

### Brève description des figures

La figure 1 représente schématiquement une vue en coupe axiale d'une machine selon une première forme d'exécution préférée de la présente invention.
La figure 2 représente schématiquement une vue en coupe axiale d'une machine selon une seconde forme d'exécution préférée de la présente invention.

### Description de formes d'exécution préférée de l'invention

La présente invention divulgue une machine dans laquelle on applique séparément les différentes fonctions précitées, grâce à l'utilisation d'un étagement particulier tel que par exemple (non limitatif) : aspiration du mélange liquide/gaz, mise en pression, dégazage du mélange, déshuilage du gaz extrait à l'étape précédente, etc.

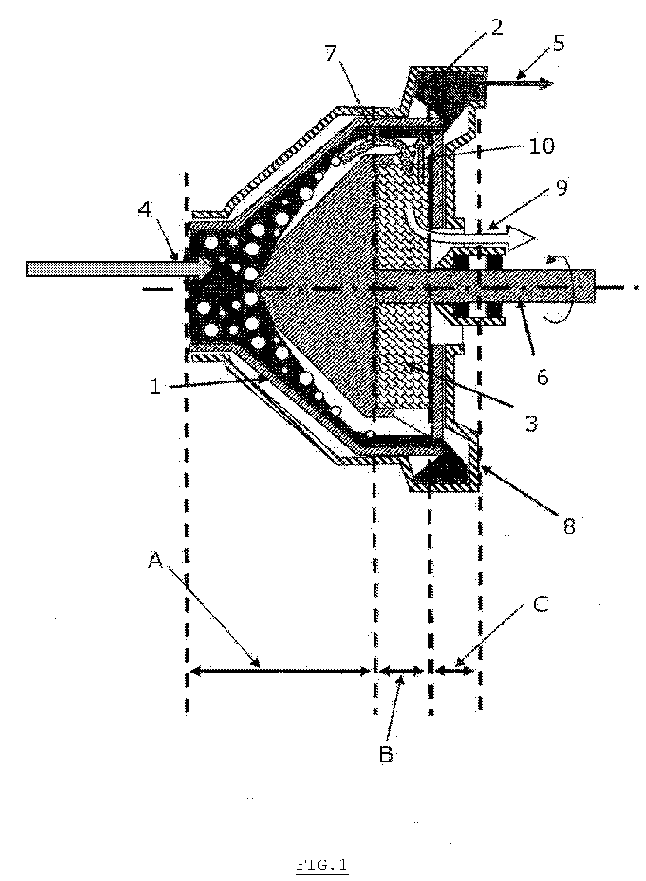

Selon une forme d'exécution particulière, la présente invention divulgue en particulier une machine telle que représentée sur la figure 1, comprenant trois étages et quatre zones aptes à réaliser séparément les quatre fonctions précitées :
- un premier étage A correspondant à une zone de pompage axialo-centrifuge du mélange air/huile assurant la fonction d'aspiration avec séparation partielle des deux fluides, appelée « inducteur » ;
- un deuxième étage B de séparation tournante, subdivisé en deux zones concentriques, une première zone tampon, essentiellement annulaire à la périphérie externe du deuxième étage B, permettant la désaération de l'huile, et une seconde zone interne essentiellement cylindrique permettant le séchage (ou déshuilage) de l'air et
- un troisième étage C correspondant à la zone de pompage et refoulement final de l'huile purifiée.

Plus en détail, le dispositif selon une première forme d'exécution préférée de l'invention, représenté sur la figure 1, se compose d'un rouet ou rotor 1 à aubes, se trouvant dans une cavité à paroi tronconique pour le déplacement du fluide diphasique à séparer 4, qui permet une première séparation axialo-centrifuge et une désaération au sein même du rotor, d'une volute fixe 2, c'est-à-dire une cavité en spirale formée entre le carter fixe 8 et l'extrémité radiale du rotor 1 et d'un disque de mousse métallique 3 pour la purification finale de l'air. L'accouplement du rotor 1 à un moteur externe au dispositif (non représenté) se fait grâce à un arbre mécanique axial 6.

Le premier étage A ci-dessus correspond au rouet axialo-centrifuge 1, qui donne au fluide diphasique entrant 4 la pression nécessaire aux fonctions suivantes. Une première séparation axialo-radiale centrifuge s'opère déjà à ce niveau suite à l'action de la force centrifuge sur les deux fluides de masses volumiques différentes (air et huile).

Le deuxième étage B correspond au moyen de désaération et d'assèchement de l'air 7 chargé de gouttelettes de liquide en suspension 10.

Dans une première zone du deuxième étage B, située à la périphérie externe, la partie du mélange enrichie en huile par le premier étage A est désaéré par centrifugation avant d'être transmis vers le troisième étage C.

La seconde zone du deuxième étage B, dite de déshuilage ou de séchage, est située près de l'axe et est en rotation. Cette zone de séchage comprend ou non un corps solide comme une mousse métallique 3, traversée par l'air 7 chargé d'huile. Le déshuilage de l'air est généré par la séparation de l'huile et l'air grâce à la force centrifuge différentielle agissant sur les deux phases. Alternativement, la mousse métallique 3 peut être remplacée par des aubages de déshuilage. Les gouttelettes 10 entrant en collision avec une paroi de cette mousse 3 sont redirigées vers la volute 2 par l'action centrifuge du système. L'air purifié 9 est extrait axialement. L'extraction de l'air purifié peut avantageusement être réalisée par un orifice axial pratiqué dans l'arbre 6 (non représenté). L'huile rejetée par cette zone de déshuilage est éjectée à la périphérie de la zone, qui correspond à la zone de désaération.

La troisième zone C permet le refoulement et la mise en pression de l'huile séparée. Elle comprend la partie la plus externe du rouet 1 et la volute 2, qui permet de récupérer l'huile 5 sortant du second étage B, après séparation complète de l'huile et de l'air. La zone C est plus éloignée de l'axe que la zone B. Cette partie sert également de diffuseur transformant l'énergie cinétique du liquide en pression. L'huile purifiée 5 est extraite axialement ou tangentiellement de la volute 2. Cette zone C a donc également une fonction de pompage.

De préférence, cet équipement et la ou les pompes d'alimentation éventuelles sont entraînés par un seul arbre 6. L'invention est avantageusement compatible avec un entraînement de type mécanique, électrique ou autre.

De préférence encore, ces dispositifs sont intégrés dans un même carter 8.

Avantageusement, la pureté du fluide sortant par la volute, en l'occurrence l'huile dans le cas des systèmes de refroidissement et de lubrification des turboréacteurs, est améliorée par la conservation d'un anneau liquide dans la volute 2 quel que soit le mélange à l'entrée de la machine.

Cette conservation de l'anneau liquide dans la volute 2 peut encore avantageusement être obtenue grâce à une vanne placée en sortie de volute 2 dont le tarage est tel que seul le fluide de densité supérieure permet de l'ouvrir (non représenté).

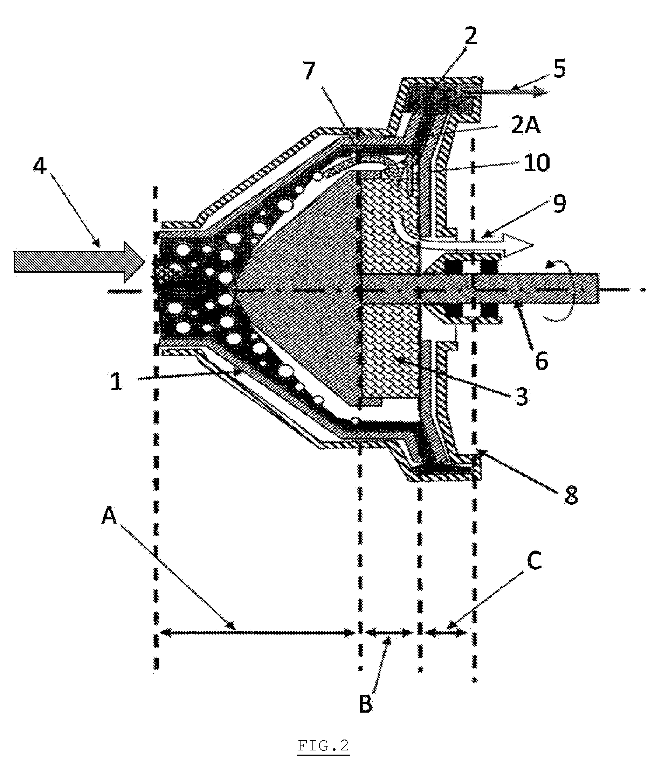

Par ailleurs, la figure 2 montre une autre forme d'exécution de l'invention, où le rouet 1 a été configuré dans sa partie la plus éloignée de l'axe (la plus externe) de manière à permettre une séparation encore plus efficace de l'huile pure. Par exemple, le rouet 1 peut présenter un canal radial 2A débouchant de manière sensiblement parallèle à la direction de la force centrifuge dans la volute 2. Cette forme d'exécution vise encore à diminuer les risques de reflux de l'huile séparée à partir de la volute vers l'intérieur de la machine.

Ainsi l'invention permet de limiter le risque de formation et d'expulsion d'un bouchon d'air au niveau de la volute.

Le dispositif de l'invention peut avantageusement être intégré dans les groupes de lubrification existants dans les moteurs aéronautiques.

### Avantages de l'invention

Répondant aux problèmes d'associer les deux fonctions de séparation nécessaires pour obtenir les deux phases les plus pures possibles en un seul équipement, l'invention propose une zone tampon permettant de gérer les variations de richesse du mélange et donc d'accepter un mélange allant d'un gaz pur à un liquide pur et d'obtenir les deux phases de ce mélange séparément. L'obtention de ces phases pures représente une avancée d'un point de vue de l'impact sur l'environnement en limitant la consommation d'huile, c'est-à-dire le rejet d'huile avec l'air.

Un autre avantage de l'invention est la régulation de la pression de sortie de l'huile ainsi que l'obtention d'une pression suffisante et non excessive en sortie par l'éloignement de la volute par rapport à l'axe de rotation du rouet. De plus, ceci permet de conserver une nappe circulaire continue de liquide (huile) facilitant les changements de régimes moteurs et de régimes d'écoulement.

## Revendications

1. Machine combinée de pompage et de séparation en deux phases distinctes et purifiées d'un mélange ou fluide diphasique liquide/gaz, de préférence huile/air, en entrée de la machine, comprenant des moyens d'aspiration, de pompage et de séparation partielle du fluide diphasique, des moyens de séchage et d'évacuation du gaz séparé et des moyens de dégazage et de refoulement du liquide séparé, ladite machine comportant au moins trois étages (A, B, C) physiquement séparés, aptes à être mis en mouvement par un moyen interne ou externe à la machine et intégrés dans un carter (8) unique :
- un premier étage (A), muni d'une entrée (4) pour le fluide diphasique, dans lequel ont lieu l'aspiration, le pompage et une séparation partielle du fluide diphasique en deux phases distinctes, une phase essentiellement liquide et une phase essentiellement gazeuse, ledit premier étage (A) comprenant au moins partiellement un rouet axialo-centrifuge de forme tronconique (1) pouvant être mis en rotation dans un carter fixe (8) de même forme, couplé à un arbre d'entraînement (6) disposé selon l'axe de la machine, l'ensemble étant appelé inducteur, et qui confère au fluide diphasique entrant une pression de pompage et provoque la séparation centrifuge partielle en une phase essentiellement liquide et une phase essentiellement gazeuse ;
- un deuxième étage (B), comprenant deux zones :
- une première zone dans laquelle a lieu le dégazage de la phase essentiellement liquide extraite du premier étage (A) et
- une seconde zone dans laquelle a lieu le séchage de la phase essentiellement gazeuse extraite du premier étage (A), muni d'une première sortie (9) pour le gaz séché ;
- un troisième étage (C), dans lequel a lieu le refoulement et la mise en pression du liquide dégazé, muni d'une seconde sortie (5) pour le liquide dégazé ;
**caractérisée en ce que** le troisième étage (C) comprend une volute (2), située de manière distale par rapport à l'arbre d'entraînement (6) et configurée pour que le liquide obtenu à la sortie de la première zone du deuxième étage (B) soit mis en pression dans ladite volute (2) et refoulé par la seconde sortie (5).

2. La machine selon la revendication 1, **caractérisée en ce que** les deux zones du deuxième étage (B) sont concentriques, la première zone étant un tampon essentiellement annulaire à la périphérie externe du deuxième étage (B) qui permet le dégazage ou la désaération de la phase essentiellement liquide et la seconde zone étant une zone essentiellement cylindrique interne au deuxième étage (B) qui permet le séchage ou le déshuilage de la phase essentiellement gazeuse.

3. La machine selon la revendication 1, **caractérisée en ce que** la première zone du second étage (B) comprend la partie la plus externe de l'inducteur (1), située de manière distale par rapport à l'arbre d'entraînement (6) et configurée pour que le liquide obtenu après séparation partielle et extraction dans le premier étage (A) soit dégazé avant d'être transféré au troisième étage (C).

4. La machine selon la revendication 1, **caractérisée en ce que** la seconde zone du second étage (B) est couplée de manière rotative à l'arbre d'entraînement (6), située de manière proximale par rapport audit arbre (6) et configurée pour que le gaz chargé de gouttelettes de liquide après séparation partielle et extraction dans le premier étage (A) soit déshuilé par passage forcé dans ladite seconde zone et extrait de la machine par la première sortie (9).

5. La machine selon la revendication 4, **caractérisée en ce que** la seconde zone comprend un disque formé d'un corps solide poreux ou percé de canaux d'un diamètre intérieur vers l'extérieur, ou encore des aubages de déshuilage.

6. La machine selon la revendication 4, **caractérisée en ce que** la première sortie (9) comprend un orifice axial ménagé dans l'arbre d'entraînement (6).

7. La machine selon la revendication 1, **caractérisée en ce que** la volute (2) est configurée pour maintenir, en utilisation, un anneau continu de liquide en son sein, quel que soit la composition du mélange en entrée de la machine.

8. La machine selon la revendication 1, **caractérisée en ce que** le liquide refoulé (5) est extrait de la volute (2) axialement ou tangentiellement.

9. La machine selon la revendication 7, **caractérisée en ce que** ladite volute (2) comprend une vanne placée en sortie de volute (2), ladite vanne ayant un tarage ne permettant que la sortie de liquide, c'est-à-dire le fluide de densité supérieure.

10. La machine selon la revendication 7, **caractérisée en ce que** l'inducteur (1) présente, dans sa partie distale par rapport à l'axe, un canal radial (2A) débouchant dans la volute (2) de manière sensiblement parallèle à la direction de la force centrifuge à laquelle le fluide diphasique est soumis.

11. Circuit d'huile de lubrification et de refroidissement dans un moteur aéronautique, de préférence un turboréacteur, comprenant une machine combinée de pompage et de séparation en deux phases distinctes purifiées du fluide diphasique huile/air en entrée de la machine, selon l'une quelconque des revendications précédentes.

12. Méthode pour la réalisation combinée de pompage et de séparation d'un fluide diphasique huile/air en deux phases distinctes et purifiées, dans un circuit d'huile de lubrification et de refroidissement d'un moteur aéronautique, mettant en oeuvre la machine selon l'une quelconque des revendications précédentes, **caractérisée en ce que** l'on effectue, dans des étages (A, B, C) séparés physiquement, les fonctions respectives d'aspiration, de pompage et de séparation partielle du fluide diphasique, de séchage et d'évacuation du gaz séparé et de dégazage et de refoulement du liquide séparé, de la manière suivante :
- dans le premier étage (A), muni d'une entrée (4) pour le fluide diphasique, sont effectués l'aspiration, le pompage et la séparation partielle du fluide diphasique en deux phases distinctes, une phase essentiellement liquide et une phase essentiellement gazeuse ;
- dans la première zone du deuxième étage (B) est effectuée le dégazage de la phase essentiellement liquide extraite du premier étage (A);
- dans la seconde zone du deuxième étage (B) est effectué le séchage de la phase essentiellement gazeuse extraite du premier étage (A), le gaz purifié étant finalement extrait par une première sortie (9) ;
- dans le troisième étage (C) sont effectués le refoulement et la mise en pression du liquide purifié extrait du deuxième étage (B), ledit liquide purifié étant mis en pression dans une volute (2) et finalement extrait par une seconde sortie (5).

## Patentansprüche

1. Kombinierte Maschine zum Pumpen und Abscheiden eines zweiphasigen Flüssigkeits-Gas-Gemischs oder -Fluids am Eingang der Maschine, vorzugsweise Öl/Luft, in zwei unterschiedliche und gereinigte Phasen, umfassend Ansaug-, Pump- und partielle Abscheidemittel des zweiphasigen Fluids, Trocknungs- und Ableitungsmittel des abgeschiedenen Gases und Entgasungs- und Fördermittel der abgeschiedenen Flüssigkeit, wobei die Maschine mindestens drei physisch getrennte Stufen (A, B, C) umfasst, die imstande sind, von einem Mittel, das sich innerhalb oder außerhalb der Maschine befindet, in Bewegung gesetzt zu werden und die in einem einzigen Gehäuse (8) integriert sind:
- eine erste Stufe (A), die mit einem Eingang (4) für das zweiphasige Fluid ausgestattet ist, in welcher das Ansaugen, das Pumpen und eine partielle Abscheidung des zweiphasigen Fluids in zwei unterschiedliche Phasen, eine im Wesentlichen flüssige Phase und eine im Wesentlichen gasförmige Phase, stattfindet, wobei die erste Stufe (A) mindestens teilweise ein kegelstumpfförmiges Axial-Zentrifugal-Laufrad (1) umfasst, das in einem festen Gehäuse (8) mit derselben Form in Rotation versetzbar ist, das an eine Antriebswelle (6) gekoppelt ist, die gemäß der Achse der Maschine angeordnet ist, wobei die Gesamtheit als Induktor bezeichnet wird, und das dem einlaufenden zweiphasigen Fluid einen Pumpdruck verleiht und die partielle Zentrifugalabscheidung in eine im Wesentlichen flüssige Phase und eine im Wesentlichen gasförmige Phase bewirkt,
- eine zweite Stufe (B), die zwei Zonen umfasst:
- eine erste Zone, in welcher die Entgasung der im Wesentlichen flüssigen, aus der ersten Stufe (A) ausgeleiteten Phase erfolgt, und
- eine zweite Zone, in welcher die Trocknung der im Wesentlichen gasförmigen Phase erfolgt, die aus der ersten Stufe (A) ausgeleitet wird, die mit einem ersten Ausgang (9) für das getrocknete Gas ausgestattet ist,
- eine dritte Stufe (C), in welcher die Förderung und die Druckbeaufschlagung der entgasten Flüssigkeit stattfindet, und die mit einem zweiten Ausgang (5) für die entgaste Flüssigkeit ausgestattet ist,
**dadurch gekennzeichnet, dass** die dritte Stufe (C) ein Spiralgehäuse (2) umfasst, das sich in Bezug zur Antriebswelle (6) distal befindet und konfiguriert ist, damit die am Ausgang der ersten Zone der zweiten Stufe (B) erhaltene Flüssigkeit in dem Spiralgehäuse (2) unter Druck gesetzt und durch den zweiten Ausgang (5) gefördert wird.

2. Maschine nach Anspruch 1, **dadurch gekennzeichnet, dass** die zwei Zonen der zweiten Stufe (B) konzentrisch sind, wobei die erste Zone ein im Wesentlichen ringförmiger Puffer am äußeren Umfang der zweiten Stufe (B) ist, der die Entgasung oder die Entlüftung der im Wesentlichen flüssigen Phase erlaubt, und die zweite Zone eine im Wesentlichen zylindrische Zone im Inneren der zweiten Stufe (B) ist, die die Trocknung oder die Entölung der im Wesentlichen gasförmigen Phase erlaubt.

3. Maschine nach Anspruch 1, **dadurch gekennzeichnet, dass** die erste Zone der zweiten Stufe (B) das äußerste Teil des Induktors (1) umfasst, das sich in Bezug zur Antriebswelle (6) distal befindet und konfiguriert ist, damit die nach der partiellen Abscheidung und Extraktion in der ersten Stufe (A) erhaltene Flüssigkeit entgast wird, bevor sie an die dritte Stufe (C) weitergeleitet wird.

4. Maschine nach Anspruch 1, **dadurch gekennzeichnet, dass** die zweite Zone der zweiten Stufe (B) an die Antriebswelle (6) rotierend gekoppelt ist, sich in Bezug zur Welle (6) proximal befindet und konfiguriert ist, damit das nach der partiellen Abscheidung und Extraktion in der ersten Stufe (A) mit Flüssigkeitströpfchen belastete Gas mittels erzwungenen Durchgangs in die zweite Zone entölt und durch den ersten Ausgang (9) aus der Maschine ausgeleitet wird.

5. Maschine nach Anspruch 4, **dadurch gekennzeichnet, dass** die zweite Zone eine Scheibe, die von einem porösen oder von Kanälen mit einem Innendurchmesser nach außen durchbrochenen Festkörper gebildet ist, oder auch Entölungschaufeln umfasst.

6. Maschine nach Anspruch 4, **dadurch gekennzeichnet, dass** der erste Ausgang (9) eine axiale, in der Antriebswelle (6) ausgebildete Öffnung umfasst.

7. Maschine nach Anspruch 1, **dadurch gekennzeichnet, dass** das Spiralgehäuse (2) konfiguriert ist, um im Betrieb unabhängig von der Zusammensetzung des Gemischs am Eingang der Maschine einen kontinuierlichen Flüssigkeitsring in sich zu halten.

8. Maschine nach Anspruch 1, **dadurch gekennzeichnet, dass** die geförderte Flüssigkeit (5) aus dem Spiralgehäuse (2) axial oder tangential ausgeleitet wird.

9. Maschine nach Anspruch 7, **dadurch gekennzeichnet, dass** das Spiralgehäuse (2) ein Ventil umfasst, das am Ausgang des Spiralgehäuses (2) platziert ist, wobei das Ventil eine Einstellung hat, die nur den Ausgang von Flüssigkeit erlaubt, das heißt, von Fluid mit höherer Dichte.

10. Maschine nach Anspruch 7, **dadurch gekennzeichnet, dass** der Induktor (1) einen in seinem in Bezug zur Achse distalen Teil radialen Kanal (2A) aufweist, der im Wesentlichen parallel zur Richtung der Zentrifugalkraft, welcher das zweiphasigen Fluid ausgesetzt ist, in das Spiralgehäuse (2) mündet.

11. Schmier- und Kühlölkreislauf in einem Luftfahrzeugmotor, vorzugsweise in einem Turboreaktor, der eine kombinierte Maschine zum Pumpen und Abscheiden des zweiphasigen Öl-Luft-Fluids am Eingang der Maschine in zwei unterschiedliche gereinigte Phasen umfasst, nach irgendeinem der vorangehenden Ansprüche.

12. Methode für die kombinierte Umsetzung des Pumpens und Abscheidens eines zweiphasigen Öl-Luft-Fluids in zwei unterschiedliche und gereinigte Phasen in einem Schmier- und Kühlölkreislauf eines Luftfahrzeugmotors, wobei die Maschine nach irgendeinem der vorangehenden Ansprüche umgesetzt wird, **dadurch gekennzeichnet, dass** in physisch getrennten Stufen (A, B, C) die jeweiligen Funktionen Ansaugen, Pumpen und partielles Abscheiden des zweiphasigen Fluids, Trocknen und Ableiten des abgeschiedenen Gases und Entgasen und Fördern der abgeschiedenen Flüssigkeit folgendermaßen durchgeführt werden:
- in der ersten Stufe (A), die mit einem Eingang (4) für das zweiphasige Fluid ausgestattet ist, wird das Ansaugen, das Pumpen und das partielle Abscheiden des zweiphasigen Fluids in zwei unterschiedliche Phasen, eine im Wesentlichen flüssige Phase und eine im Wesentlichen gasförmige Phase, durchgeführt,
- in der ersten Zone der zweiten Stufe (B) wird das Entgasen der im Wesentlichen flüssigen, aus der ersten Stufe (A) ausgeleiteten Phase durchgeführt,
- in der zweiten Zone der zweiten Stufe (B) wird das Trocknen der im Wesentlichen gasförmigen, aus der ersten Stufe (A) ausgeleiteten Phase durchgeführt, wobei das gereinigte Gas letztendlich durch einen ersten Ausgang (9) ausgeleitet wird,
- in der dritten Stufe (C) werden das Fördern und das Druckbeaufschlagen der gereinigten, aus der zweiten Stufe (B) ausgeleiteten Flüssigkeit durchgeführt, wobei die gereinigte Flüssigkeit in einem Spiralgehäuse (2) druckbeaufschlagt und letztendlich durch einen zweiten Ausgang (5) ausgeleitet wird.

## Claims

1. Combined machine for pumping and separating into two distinct and purified phases a two-phase liquid/gas mixture or fluid, preferably oil/air, at the intake of the machine, comprising means for the suction, pumping and partial separation of the two-phase fluid, means for drying and extracting the separated gas and means for degassing and forcing back the separated liquid, said machine comprising at least three physically separated stages (A,B,C) that can be activated by a means that is internal or external to the machine and built into a single casing (8):
- a first stage (A), equipped with an intake (4) for the two-phase fluid, in which the two-phase fluid is sucked, pumped and partially separated into two distinct phases, one phase being mainly liquid and the other being mainly gaseous, said first stage (A) comprising at least partially an axial-centrifugal impeller of tapered shape (1) that may be rotated in a fixed casing (8) of the same shape, linked to a drive shaft (6) positioned along the axis of the machine, the whole assembly being called an "inductor", and that gives the incoming two-phase fluid a pumping pressure and causes the partial centrifugal separation into a mainly liquid phase and a mainly gaseous phase;
- a second stage (B), comprising two zones:
- a first zone in which the mainly liquid phase extracted from the first stage (A) is degassed, and
- a second zone, equipped with a first outlet (9) for the dried gas, in which the mainly gaseous phase extracted from the first stage (A) is dried;
- a third stage (C), equipped with a second outlet (5) for the degassed liquid, in which the degassed liquid is forced back and pressurised;
**characterised in that** the third stage (C) comprises a volute (2), located distally relative to the drive shaft (6) and configured so that the liquid obtained at the outlet from the first zone of the second stage (B) is pressurised in said volute (2) and forced back through the second outlet (5).

2. The machine according to claim 1, **characterised in that** the two zones of the second stage (B) are concentric, the first zone being an essentially ring-shaped buffer on the outer periphery of the second stage (B) which allows to degas or deaerate the mainly liquid phase, and the second zone being an essentially cylindrical zone inside the second stage (B) that allows to dry the mainly gaseous phase or remove the oil from it.

3. The machine according to claim 1, **characterised in that** the first zone of the second stage (B) comprises the outermost part of the inductor (1), located distally relative to the drive shaft (6) and configured so that the liquid obtained after partial separation and extraction in the first stage (A) is degassed before it is transferred to the third stage (C).

4. The machine according to claim 1, **characterised in that** the second zone of the second stage (B) is rotationally linked to the drive shaft (6), located proximally relative to said shaft (6) and configured so that the gas charged with droplets of liquid after partial separation and extraction in the first stage (A) has its oil removed by forced passage in said second zone and is extracted from the machine through the first outlet (9).

5. The machine according to claim 4, **characterised in that** the second zone comprises a disc made of a solid body that is porous or drilled with channels of internal diameter to the outside, or of sets of oil-removal blades.

6. The machine according to claim 4, **characterised in that** the first outlet (9) comprises an axial aperture made in the drive shaft (6).

7. The machine according to claim 1, **characterised in that** the volute (2) is configured so as to maintain while being used a continuous ring of liquid inside it, whatever the composition of the mixture at the intake of the machine.

8. The machine according to claim 1, **characterised in that** the forced-back liquid (5) is axially or tangentially extracted from the volute (2).

9. The machine according to claim 7, **characterised in that** said volute (2) comprises a valve positioned at the outlet from the volute (2), said valve being calibrated so as to only allow liquid to exit, i.e. fluid with the higher density.

10. The machine according to claim 7, **characterised in that** the inductor (1) comprises on its distal part relative to the axis a radial channel (2A) emerging in the volute (2) more or less parallel to the direction of the centrifugal force to which the two-phase fluid is subjected.

11. Oil circuit for lubricating and cooling an aircraft engine, preferably a turbojet, comprising a combined machine for pumping and separating into two distinct and purified phases the two-phase oil/air fluid at the intake of the machine, according to any of the above claims.

12. Method for achieving combined pumping and separation of a two-phase oil/air fluid into two distinct and purified phases, in an oil circuit for lubricating and cooling an aircraft engine, implementing the machine according to any of the above claims, **characterised in that**, in physically separated stages (A,B,C), the respective functions of suction, pumping and partial separation of the two-phase fluid, drying and extraction of the gas separated and degassing and forcing back of the separated liquid are performed in the following manner:
- in the first stage (A), equipped with an intake (4) for the two-phase fluid, the two-phase fluid is sucked, pumped and partially separated into two distinct phases, one phase being mainly liquid and the other mainly gaseous;
- in the first zone of the second stage (B), the mainly liquid phase extracted from the first stage (A) is degassed;
- in the second zone of the second stage (B), the mainly gaseous phase extracted from the first stage (A) is dried, the purified gas being finally extracted through a first outlet (9);
- in the third stage (C), the purified liquid extracted from the second stage (B) is forced back and pressurised, said purified liquid being pressurised in a volute (2) and finally extracted through a second outlet (5).
